# EUROPEAN PATENT SPECIFICATION

(11) **EP 2 514 725 B1**
(45) Date of publication and mention of the grant of the patent: **18.12.2013**
(21) Application number: 12164717.6
(22) Date of filing: 19.04.2012
(51) Int. Cl.: C03C 17/30, C08G 65/22, C08G 65/336, C08L 71/02, C08L 101/10, C09D 5/16, C09D 171/02, C09J 5/02

(54) **Fluorooxyalkylene group-containing polymer composition, a surface treatment agent comprising the same and an article treated with the agent**
Fluoroxyalkylengruppenhaltige Polymerzusammensetzung, Oberflächenbehandlungsmittel dieses enthaltend und mit dem Mittel behandelter Artikel
Composition polymère contenant un groupe fluorooxyalkylène, composition pour traitement de surface le comprenant et article traité avec la composition de traitement

(30) Priority: 21.04.2011 JP 2011095514; 21.03.2012 JP 2012064363
(43) Date of publication of application: 24.10.2012
(73) Proprietor: Shin-Etsu Chemical Co., Ltd., Chiyoda-ku Tokyo 100-0004 (JP)
(72) Inventor: Yamane, Yuji, Annaka-shi, Gunma 379-0224 (JP); Yamaguchi, Koichi, Annaka-shi, Gunma 379-0224 (JP); Koike, Noriyuki, Annaka-shi, Gunma 379-0224 (JP)
(74) Representative: Jansen, Cornelis Marinus

(56) References cited:
- EP-A1- 1 813 640

## Description

### FIELD OF THE INVENTION

The present invention relates to a fluorooxyalkylene group-containing polymer composition, specifically, relates to a composition which forms a coating having good adhesiveness to a substrate, water- and oil- repellency, low dynamic friction, and good abrasion resistance, and relates to a surface treatment agent comprising the same and an article treated with the agent.

### BACKGROUND OF THE INVENTION

Recently, there is an increasing need for technology to attain fingerprint proofness or easy removal of fouling on a surface of a display for better appearance or visibility. Thus, a material which meets these requirements is desired. In particular, a fingerprint smudge adheres easily to the surface of a touch panel display and, therefore, it is desired that a water- and oil-repellent layer is formed on the surface. However, a conventional water- and oil- repellent layer has the problem that attrition resistance is poor so that the stain resistance deteriorates during use.

Compounds containing a perfluorooxyalkylene moiety generally have a very small surface free energy and, accordingly, have good water- and oil- repellency, chemical resistance, lubricity, releasing property, and antifouling property. Taking advantage of these properties, they are widely used as, for example, water- and oil- repellent agents or antifouling agents for paper or fiber, lubricants for magnetic storage media, oil repellent components for precision apparatuses, releasing agents, cosmetics, and protective coatings. These properties, on the other hand, mean that such compounds do not stick or closely adhere to other materials, either. Even if they can be applied to a material, it is difficult to have a coating closely adhered to the material.

Silane coupling agents are well known as an agent which bonds an organic compound to a surface of a substrate such as glass or a cloth. The silane coupling agents have an organic functional group and a reactive silyl group, usually an alkoxy silyl group, in the molecule. The alkoxy silyl group autocondenses in the presence of moisture in air to become a siloxane and forms a coating. At the same time, the alkoxy silyl group chemically and physically bonds to a surface of glass or metal to form a durable coating.

Japanese Patent Application Laid-Open No.Sho-58-167597 discloses that a fluoroaminosilane compound represented by the following formula is applied on glass to attain high water- and oil- repellency. However, the perfluorooxyalkylene moiety of this compound is relatively short, so that lubricity, the releasing property and the antifouling property are insufficient. 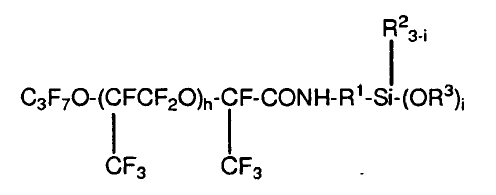 wherein R² and R³ are alkyl groups having 1 to 4 carbon atoms, R¹ is CH₂CH₂CH₂ or CH₂CH₂NHCH₂CH₂CH₂, h is an integer of from 0 to 8, and "i" is 2 or 3.

Japanese Patent Application Laid-Open No.2000-143991 discloses perfluoropolyether- modified aminosilane represented by the following formula as a compound having a branched, long perfluorooxyalkylene moiety. The perfluoropolyether-modified aminosilane has a high water- and oil- repellency. However, its stain resistance and lubricity are insufficient due to the branch structure in the main chain. 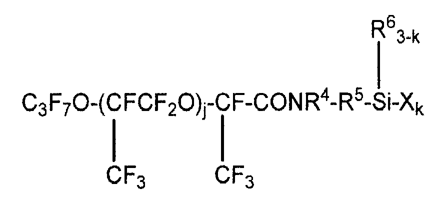 wherein X is a hydrolyzable group, R⁴ is a monovalent hydrocarbon group, R⁶ is a hydrogen atom or a monovalent hydrocarbon group, R⁵ is an alkylene group optionally interrupted by an NH group, j is an integer of from 14 to 49, and k is 2 or 3.

Japanese Patent Application Laid-Open No.2003-238577 discloses a perfluoropolyether-modified silane represented by the following formula which has a linear perfluorooxyalkylene group. Lenses and anti-reflection films treated with the aforesaid perfluoropolyether-modified silane are good in lubricity, releasing property and abrasion resistance. However, the lubricity intrinsic is not well exhibited due to both terminals being fixed on a substrate. 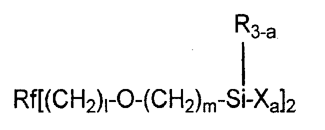 wherein Rf is a divalent linear perfluoropolyether group, R is an alkyl group having 1 to 4 carbon atoms or a phenyl group, X is a hydrolyzable group, l is an integer of from 0 to 2, m is an integer of from 1 to 5, and a is 2 or 3.

Japanese Patent Application Laid-Open No.2007-297589 discloses a perfluoropolyether-modified silane represented by the following formula as a treatment agent which has improved lubricity. However, this compound does not have a terminal fluorinated group, so that its water- and oil- repellency, dynamic friction and releasing property are inferior. (Z²Q)_{β}Rf(QZ¹A_{α})_{2-β}
wherein Rf is a divalent perfluoroether-containing group, Q is a divalent organic group, Z¹ and Z² are organopolysiloxane moieties, A is a monovalent group having a terminal reactive silyl group, α is an integer of from 1 to 8, and β is the number larger than 0 and less than 2.

Patent literature 1: Japanese Patent Application Laid-Open No. Sho-58-167597
Patent literature 2: Japanese Patent Application Laid-Open No. 2000-143991
Patent literature 3: Japanese Patent Application Laid-Open No. 2003-238577
Patent literature 4: Japanese Patent Application Laid-Open No. 2007-297589

### SUMMARY OF THE INVENTION

### PROBLEMS TO BE SOLVED BY THE INVENTION

A water- and oil- repellent layer which covers the surface of a touch panel display requires a low coefficient of dynamic friction in view of abrasion resistance and removal of fingerprint. Thus, development of a water- and oil- repellent layer which has good abrasion resistance and a low coefficient of dynamic friction is desired. The present inventors invented a fluorooxyalkylene group-containing polymer composition which comprises a mixture of a fluorooxyalkylene group-containing polymer having a fluorine atom at one terminal and a hydrolyzable group at the other terminal and a fluorooxyalkylene group-containing polymer having hydrolyzable groups at both terminals (see Japanese Patent Application Laid-Open No.2011-116947). However, a coating formed from the composition does not have sufficient abrasion resistance. Therefore, an object of the present invention is to provide a fluorooxyalkylene group-containing polymer composition which can form a water- and oil- repellent layer having better abrasion resistance and a lower dynamic friction.

### MEANS TO SOLVE THE PROBLEMS

A linear polymer having a fluorooxyalkylene group in the main chain and a hydrolysable group at one terminal of the molecular chain can give excellent abrasion resistance to a substrate compared to a linear polymer having hydrolysable groups at both terminals. A fluorooxyalkylene group-containing polymer whose main chain is composed of -(OC₂F₄)ₑ(OCF₂)_{f}O- has a lower coefficient of dynamic friction. The present inventors have made research to solve the aforesaid problems and found that a composition which comprises a mixture of a fluorooxyalkylene group-containing polymer whose main chain is composed of - (OC₂F₄)ₑ(OCF₂)_{f}O- and a hydrolysable group at one terminal and a fluorooxyalkylene group-containing polymer having hydrolysable groups at both terminals, and has 0.1 mole % or more but less than 10 mole % of a fluorooxyalkylene group-containing polymer having hydrolysable groups at both terminals can form a water- and oil- repellent layer having excellent abrasion resistance and a lower dynamic friction.

Thus, the present invention provides a fluorooxyalkylene group-containing polymer composition comprising:
a linear fluorooxyalkylene group-containing polymer represented by the following formula (1): 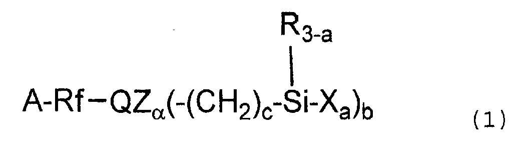 whrein Rf is represented by -(CF₂)_{d}-(OC₂F₄)ₑ(OC₂F₄)_{f}-O(CF₂)_{d}-, A is a monovalent fluorinated group whose terminal is -CF₂H, Q is a divalent organic group, Z is a divalent to octavalent organopolysiloxane moiety having a siloxane bond, R is an alkyl group having 1 to 4 carbon atoms or a phenyl group, X is a hydrolysable group, a is 2 or 3, b is an integer of from 1 to 7, c is an integer of from 1 to 20, α is 0 or 1, d is, independently of each other, 0 or an integer of from 1 to 5, e is an integer of from 0 to 80, f is an integer of from 0 to 80, and the total of e and f is from 5 to 100, and these repeating units may be sequenced at random, said polymer being hereinafter called "one-terminal hydrolyzable polymer", and
a linear fluorooxyalkylene group-containing polymer represented by the following formula (2): 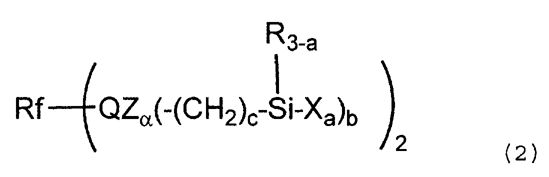 whrein Rf, Q, Z, R, X, a, b, c and α are as defined above, said polymer being hereinafter called "both-terminal hydrolyzable polymer",
   wherein the amount of the both-terminal hydrolyzable polymer is 0.1 mole % or more but less than 10 mole %, relative to the total mole of the one-terminal hydrolyzable polymer and the both-terminal hydrolyzable polymer.

Further, the present invention provides a method for preparing the fluorooxyalkylene group-containing polymer composition where the method comprises a step of subjecting a mixture of a fluorooxyalkylene group-containing polymer having a carboxyl group at one terminal and a hydroxyl group at the other terminal, hereinafter called "one-terminal carboxyl group containing polymer", and a fluorooxyalkylene group-containing polymer having hydroxyl groups at the both terminals, hereinafter called "both-terminal hydroxyl group containing polymer", to adsorption treatment and/or molecular distillation to provide a polymer composition having 0.1 mole % or more but less than 10 mole % of the both-terminal hydroxyl group containing polymer, relative to the total mole of the one-terminal carboxyl group containing polymer and the both-terminal hydroxyl group containing polymer.

### EFFECTS OF THE INVENTION

A coating formed from the present fluorooxyalkylene group-containing polymer composition has a lower coefficient of dynamic friction, excellent water- and oil- repellency and abrasion resistance, in particular excellent scrub resistance. Accordingly, a surface treatment agent comprising the present fluorooxyalkylene group-containing polymer composition can give good water- and oil-repellency and abrasion resistance, and lower dynamic friction to various articles.

### BEST MODES OF THE INVENTION

The present invention is a fluorooxyalkylene group-containing polymer composition comprising a one-terminal hydrolyzable polymer represented by the aforesaid formula (1) and a both-terminal hydrolyzable polymer represented by the aforesaid formula (2) and is characterized in that the amount of the both-terminal hydrolyzable polymer is 0.1 mole % or more but less than 10 mole %, preferably 0.3 to 9.9, more preferably 0.5 to 9.8, further more preferably 1 to 9.7 mole %, relative to the total mole of the one-terminal hydrolyzable polymer and the both-terminal hydrolyzable polymer. On account of the amount of the both-terminal hydrolyzable polymer in the afore-mentioned ranges, a layer having good abrasion resistance can be formed. Further, the main chain of the fluorooxyalkylene group-containing polymer is composed of -(CF₂)_{d}-(OC₂F₄)ₑ(OCF₂)_{f}-O(CF₂)_{d} and, thereby, can form a layer having a low coefficient of dynamic friction. In the afore-mentioned formula, d is, independently of each other, 0 or an integer of from 1 to 5, e is an integer of from 0 to 80, f is an integer of from 0 to 80, and the total of e and f is from 5 to 100, and these repeating units may be sequenced at random. The total of e and f is preferably from 10 to 80, more preferably from 15 to 60. If the total of e and f is larger than the afore-mentioned upper limit, the adhesiveness and the curability may be poor. If the total of e and f is less than the afore-mentioned lower limit, the properties of the fluorooxyalkylene group cannot be provided sufficiently.

In the afore-mentioned formula (1), A is a monovalent fluorinated group whose terminal is -CF₂H and, preferably, A is a linear fluoroalkyl group having 1 to 6 carbon atoms. Among these, a -CF₂H group is preferred.

In the afore-mentioned formulas (1) and (2), X is, independently of each other, a hydrolyzable group. Examples of X include alkoxy groups having 1 to 10 carbon atoms such as methoxy, ethoxy, propoxy and buthoxy groups; oxyalkoxy groups having 2 to 10 carbon atoms such as methoxymethoxy and methoxyethoxy groups; acyloxy groups having 1 to 10 carbon atoms such as an acetoxy group; alkenyloxy groups having 2 to 10 carbon atoms such as an isopropenoxy group; and halogen atoms such as chlorine, bromine, and iodine atoms. Among these, methoxy, ethoxy, iropropenoxy groups and a chlorine atom are preferred.

In the afore-mentioned formulas (1) and (2), R is an alkyl group having 1 to 4 carbon atoms and a phenyl group. Among these, preferred is a methyl group. "a" is 2 or 3, preferably 3 in view of reactivity and adhesiveness to a substrate. "b" is an integer of from 1 to 7, preferably 1 to 4, and c is an integer of from 1 to 20, preferably from 2 to 16, more preferably from 6 to 12.

In the afore-mentioned formulas (1) and (2), Q is a divalent organic group to link Rf with Z, or Rf with the (CH2)_{c} group. Preferred is an organic group having 2 to 12 carbon atoms which may have one or more bonds selected from an amide bond, an ether bond, an ester bond and a vinyl bond. More preferred is a substituted or unsubstituted hydrocarbon group having 2 to 12 carbon atoms which may have the aforesaid bonds, and a part of the hydrogen atoms in the hydrocarbon group may be substituted with a halogen atom such as chlorine, fluorine and bromine atoms, such as

―CH₂OCH₂CH₂―

―CH₂OCH₂CH₂CH₂―

―CF₂OCH₂CH₂CH₂―

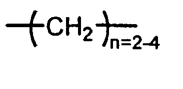

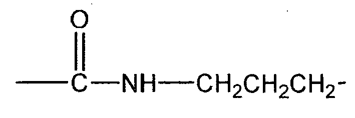

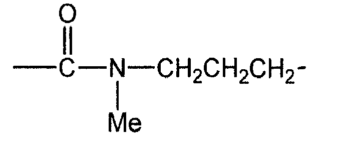

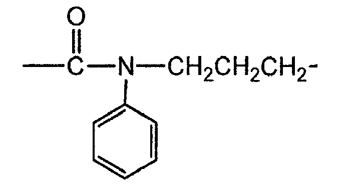

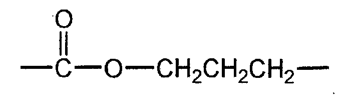

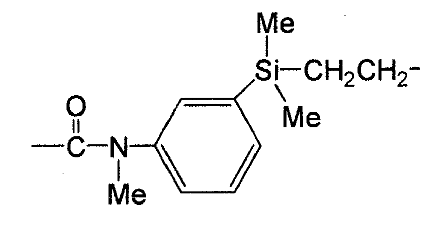

In the afore-mentioned formulas (1) and (2), Z is a divalent to octavalent organopolysiloxane moiety having a siloxane bond. Z is preferably a linear or cyclic organopolysiloxane moiety having 2 to 13 silicon atoms, preferably 2 to 5 silicon atoms. Z may contain a silalkylene structure where two silicon atoms are bonded via an alkylene group, that is, Si-(CH₂)ₙ-Si, wherein n is an integer of from 2 to 6. The present fluorooxyalkylene group-containing polymer composition has siloxane bonds in the molecule, so that the present composition can become a coating which has excellent attrition resistance and abrasion resistance.

Preferably, the organopolysiloxane moiety has an alkyl group having 1 to 8 carbon atoms, more preferably 1 to 4 carbon atoms, or a phenyl group. The alkylene group in the silalkylene bond preferably has 2 to 6 carbon atoms, more preferably 2 to 4 carbon atoms. Examples of Z include the following;

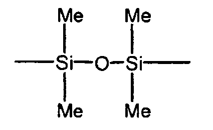

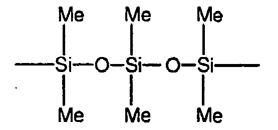

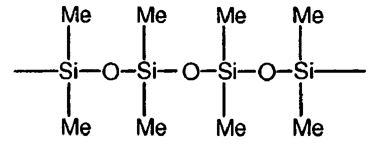

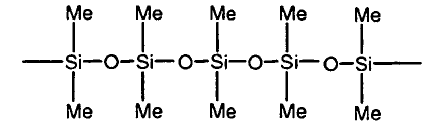

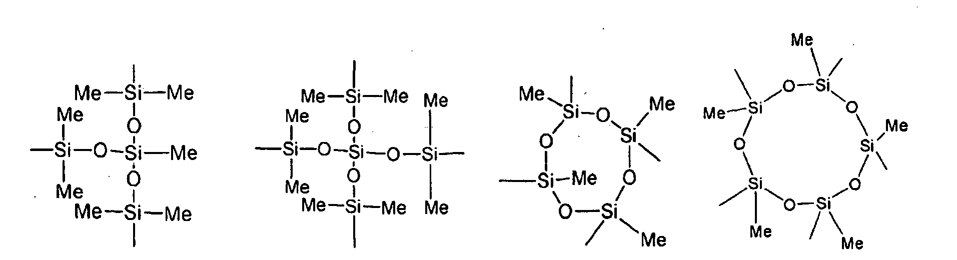

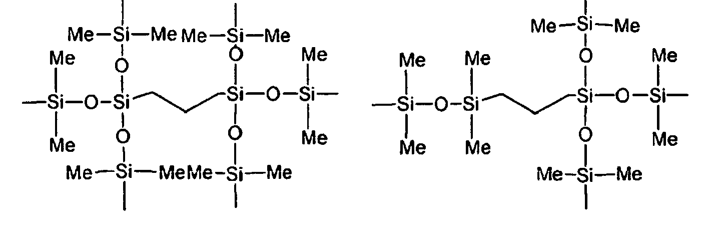

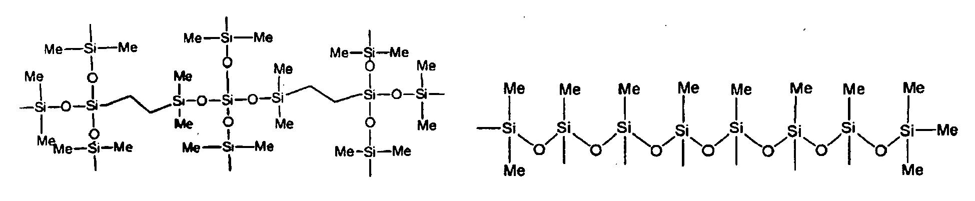

The fluorooxyalkylene group-containing polymer composition may further comprise a fluorooxyalkylene group-containing polymer represented by the following formula (3):

**A-Rf-A** ₍₃₎

wherein Rf and A are as defined for formulas (1) and (2) mentioned above, hereinafter called "non-hydrolyzable polymer".

When the present fluorooxyalkylene group-containing polymer composition comprises the afore-mentioned non-hydrolyzable polymer, the amount of the one-terminal hydrolyzable polymer is 80 mole % or more, preferably 84 mole % or more, more preferably 88 mole % or more and the amount of the both-terminal hydrolyzable polymer is 0.1 mole % or more but less than 10 mole %, preferably 0.3 to 9.5 mole %, more preferably 0.5 to 9.2 mole %, further more preferably 1 to 9 mole %, relative to the total mole of the one-terminal hydrolyzable polymer, the both-terminal hydrolyzable polymer and the non-hydrolyzable polymer. In particular, the amount of the non-hydrolyzable polymer is preferably 1 to 15 mole %, more preferably 2 to 10 mole %.

The present fluorooxyalkylene group-containing polymer composition can be prepared from a mixture comprising a fluorooxyalkylene group-containing polymer having a carboxyl group at one terminal and a hydroxyl group at the other terminal (hereinafter called "one-terminal carboxyl group containing polymer"), and a fluorooxyalkylene group-containing polymer having hydroxyl groups at both terminals (hereinafter called "both-terminal hydroxyl group containing polymer"). The mixture may further contain a fluorooxyalkylene group-containing polymer having carboxyl groups at both terminals (hereinafter called "both-terminal carboxyl group containing polymer"). Examples of a mixture include a mixture comprising polymers represented by the following formulas (a) to (c), wherein Rf¹ is a group represented by -(OC₂F₄)ₑ(OCF₂)_{f}O-, and e and f are as defined above.

HOOCCF₂-Rf¹-CF₂CH₂OH (a)

HOH₂CCF₂-Rf¹-CF₂CH₂OH (b)

HOOCCF₂-Rf¹-CF₂COOH (c)

The fluorooxyalkylene group-containing polymer having carboxyl groups at both terminals is subjected to a reduction with a metal hydride or a catalytic hydrogenation with a noble metal catalyst to replace a part of the terminal carboxyl groups with hydroxyl group to obtain the aforesaid mixture. The amount of catalyst used in the reaction may be adjusted to control the amount of the hydroxyl group introduced.

The method for preparing the present fluorooxyalkylene group-containing polymer composition is characterized by a step of subjecting the mixture comprising the one-terminal carboxyl group containing polymer and the both-terminal hydroxyl group containing polymer to adsorption treatment and/or molecular distillation so as to attain 0.1 mole % or more but less than 10 mole %, preferably 0.3 to 9.9 mole %, more preferably 0.5 to 9.8 mole%, further more preferably 1 to 9.7 mole %, of the both-terminal hydroxyl group containing polymer in the mixture, relative to the total mole of the one-terminal carboxyl group containing polymer and the both-terminal hydroxyl group containing polymer. It has been difficult to prepare a composition which is composed mainly of a polymer whose main chain is composed of -(OC₂F₄)ₑ(OCF₂)_{f}O- and which has a hydrolysable group at one terminal. The present method comprises the aforesaid step to thereby prepare a fluorooxyalkylene group-containing polymer composition comprising 0.1 mole % or more but less than 10 mole % of the both-terminal hydrolyzable polymer, relative to the total mole of the one-terminal hydrolyzable polymer and the both-terminal hydrolyzable polymer.

The adsorption treatment may be done with an acid adsorbent as anion exchange resin. For instance, the anion exchange resin is dispersed in a fluorinated solvent and mixed with the mixture comprising a one-terminal carboxyl group containing polymer and a both-terminal hydroxyl group containing polymer, whereby the polymers having a carboxyl group (s) at the terminal (s) are adsorbed on the anion exchange resin. Subsequently, the anion exchange resin is washed with a fluorinated solvent to remove the both-terminal hydroxyl group containing polymer. Then, the anion exchange resin which still adsorbs the carboxyl group containing polymer is washed with a fluorinated solvent and a strong acid. In this last step of washing, the strong acid is adsorbed on the anion exchange resin to elute the polymer having carboxyl group(s) at the terminal(s) into the fluorinated solvent. In the case where the mixture contains the both-terminal carboxyl group containing polymer, the one-terminal carboxyl group containing polymer is preferentially eluted compared to the both-terminal carboxyl group containing polymer. A composition containing the one-terminal carboxyl group containing polymer in a higher concentration is obtained in the aforesaid step.

The acid adsorbent is used in an amount of 10 to 500 g per 100 g of the polymer mixture. The treatment for adsorbing the polymers having a carboxyl group (s) at the terminal (s) on the anion exchange resin to remove the both-terminal hydroxyl group containing polymer is carried out preferably at 10 to 40 degrees C for 1 to 48 hours. The step of washing the adsorbent with a fluorinated solvent and a strong acid is conducted in such a manner that an appropriate quantity, such as 50 g, of the strong acid is added into a mixture of the fluorinated solvent and the adsorbent and stirred at 10 to 30 degrees C for 0.5 to 3 hours. Examples of the strong acid used in this step may be hydrochloric acid, but not limited thereto. After being stirred, the mixed liquid is left standing, allowing the mixture to separate into a lower fluorine phase and an upper phase of a mixture of the strong acid and the adsorbent. The fluorinated solvent phase is taken out and the fluorinated solvent is distilled off to obtain a composition comprising the one-terminal carboxylic acid polymer in a higher concentration.

Any known anion exchange resins, such as strongly basic resins, type I and type II, and weakly basic resins can be used, but are not limited thereto. For instance, a useful resin has main structure which is composed of a styrene/divinyl benzene cross-linked polystyrene, an acrylic acid polyacrylate, or a heat resistant aromatic polymer which has an ether group or a carbonyl group and into which an anion exchange group such as an amino group, a substituted amino group, a quaternary ammonium group or a carboxyl group is introduced. Examples of commercially available anion exchange resins include B20-HG, ex Organo Corporation, and DIAION SA series, PA300 series, PA400 series, UBA120 and HPA25, ex Mitsubishi Chemical Corporation.

Examples of the molecular distillation apparatus include a pot molecular distillation apparatus, a falling film molecular distillation apparatus, a centrifugal molecular distillation apparatus and a laboratory size centrifugal molecular distillation apparatus. Treatment conditions may be properly determined, and preferably a pressure of 10⁻⁵ to 10⁻¹ Pa and a temperature of 150 to 400 degrees C. In this process, a polymer which has a smaller amount of functional groups at the molecular terminals evaporates in milder conditions. Further, a compound having a hydroxyl group, -CF₂OH, is preferentially distilled off, compared to a compound having a carboxyl group, -CF₂COOH, so that the both-terminal carboxyl group containing polymer is distilled off first and, subsequently, the one-terminal carboxyl group containing polymer is distilled off. Subsequently, this process may further include a step of mixing each of the polymers separated to attain the specific mixing ratio. In this process, a composition containing the one-terminal carboxyl group containing polymer in a higher concentration can be obtained. The molecular distillation may be conducted in combination with the adsorption treatment.

Ratios among the one-terminal carboxyl group containing polymer, both-terminal hydroxyl group containing polymer and both-terminal carboxyl group containing polymer, which are obtained in the adsorption treatment and/or the molecular distillation can be determined, for instance, according to the following method. First, a mixture is dissolved in a fluorinated solvent to have the one-terminal carboxyl group containing polymer and both-terminal carboxyl group containing polymer adsorbed on an acid adsorbent, such as hydrotalcite type ion exchange resins such as Kyowado-500, ex Kyowa-chemical.co.jp, to separate the both-terminal hydroxyl group containing polymer and determine the ratio of the both-terminal hydroxyl group containing polymer in the mixture. Subsequently, the ratio of the one-terminal carboxyl group containing polymer and both-terminal carboxyl group containing polymer contained is determined according to a molar ratio of -CF₃OH groups and -CF₂COOH groups, as determined by ¹⁹F-NMR analysis.

The present method for preparing a fluorooxyalkylene group-containing polymer composition will be described below in detail.

The step where the fluorooxyalkylene group-containing polymer having carboxyl groups at both terminals is subjected to a reduction with a metal hydride or a catalytic hydrogenation with a noble metal catalyst to convert part of the terminal carboxyl groups into a hydroxyl group may be conducted in any conventional manner. Examples of a metal hydride include sodium bis(2-methoxyethoxy)alminium hydride. Examples of a noble metal catalyst include ruthenium. The mixture obtained in this step is subjected to the aforesaid molecular distillation and/or the adsorption treatment to prepare a polymer composition containing the one-terminal carboxyl group containing polymer in a higher concentration.

Then, a hydrocarbon group having a terminal carbon-carbon double bond is introduced at the terminal hydroxyl group(s) of the polymers. The introduction may be carried out in any conventional manner. Examples of a hydrocarbon group having a terminal carbon-carbon double bond include alkenyl groups having 2 to 21 carbon atoms. For instance, the polymer composition is reacted with a halogenated alkenyl compound such as ally bromide in the presence of tetrabutylammonium hydrogen sulfate, to which sodium hydroxide solution is then added dropwise to make the mixture alkaline, whereby an alkenyl group such as an allyl group is introduced at the terminal(s) of polymers. Further, in this step, the terminal CF₂COOH group at the terminal(s) of polymers becomes a CF₂H group. For instance, the polymer composition comprising the three components represented below is prepared, wherein Rf¹ is as defined above.

HF₂C-Rf¹-CF₂CH₂OCH₂CH=CH₂ (a')

H₂C=CHCH₂OCH₂CF₂-Rf¹-CF₂CH₂OCH₂CH=CH₂ (b')

HF₂C-Rf¹-CF₂H (c')

Subsequently, a hydrolyzable silyl group is introduced at the terminal carbon-carbon double bond of the polymers, where the terminal carbon-carbon double bond-containing polymers prepared in the afore-described step is addition reacted with an organosilicon compound having an SiH bond at one terminal and a hydrolyzable group at the other terminal. The hydrolyzable group may be those as described for X above. Examples of the organosilicon compound include terminal alkoxy group-containing organohydrogensilanes. For instance, in a case where the composition comprising the polymers comprising three components represented by the aforementioned (a') to (c') is reacted with trimethoxysilane, i.e., HSi(OCH₃)₃, a composition containing the polymers described below is obtained, wherein Rf¹ is as defined above. The addition reaction can be carried out in any conventional manner in the presence of an addition reaction catalyst, such as a platinum compound.

HF₂C-Rf¹-CF₂CH₂OC₃H₆Si(OCH₃)₃

(CH₃O)₃SiC₃H₆OCH₂-CF₂-Rf¹-CF₂CH₂OC₃H₆Si(OCH₃)₃

HF₂C-Rf¹-CF₂H

Alternatively, this addition reaction step may be conducted in such a manner that the polymer composition obtained in the step of introducing an unsaturated aliphatic group may be reacted with an organosilicon compound having plural SiH bonds, for instance 2 to 8 SiH groups. The resultant polymers in the composition have many remaining SiH bonds in a molecule. Therefore, the polymers may be reacted with an organosilicon compound having an unsaturated aliphatic group and a hydrolyzable group, such as vinyltrimethoxy silane, to increase the number of the terminal hydrolyzable groups in the polymers.

Alternatively, this addition reaction step may be conducted in such a manner that the polymer composition obtained in the step of introducing an unsaturated aliphatic group is reacted with a 1:1 adduct of tetramethyldisiloxane (HM) with vinyltrimethoxysilane (VMS). On account of the reaction, a composition as described below can be obtained which comprises the polymers whose perfluorooxyalkylene group is bonding to a terminal hydrolyzable silyl group via a disiloxane structure, wherein Rf¹ is as defined above. The addition reaction can be carried out in the presence of an addition reaction catalyst, such as a platinum compound, in any conventional manner.

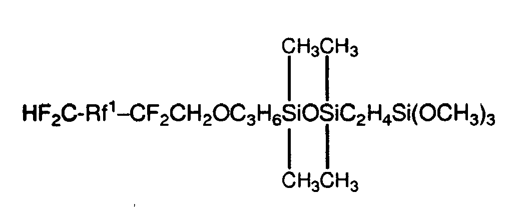

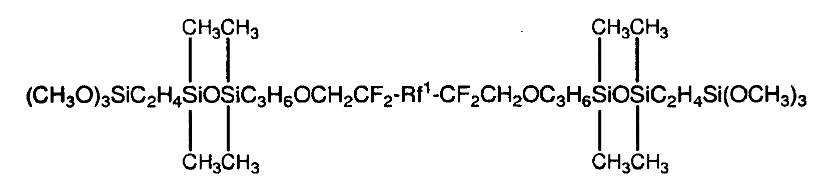

HF₂C-Rf¹-CF₃H

The present invention also provides a surface treatment agent comprising the aforesaid fluorooxyalkylene group-containing polymer composition. The surface treatment agent may contain a product which can be obtained by subjecting a part of the terminal hydrolyzable group(s) of the fluorooxyalkylene group-containing polymer composition to hydrolysis and condensation in a conventional manner.

The surface treatment agent may further contain a catalyst for hydrolysis and condensation reactions, if needed. Examples of the catalyst include organic tin compounds such as dibutyltin dimethoxide and dibutyltin dilaurate; organic titanium compounds such as tetra-n-butyl titanate; organic acids such as acetic acid, methanesulfonic acid and fluorinated carboxylic acid; and inorganic acids such as hydrochloric acid and sulfuric acid. Among these, preferred are acetic acid, tetra-n-butyl titanate, dibutyltin dilaurate and fluorinated carboxylic acid. The content of the catalyst may be a catalytic amount, which ranges typically from 0.01 to 5 parts by weight, particularly from 0.1 to 1 part by weight, per 100 parts by weight of the fluorooxyalkylene group-containing polymer composition and the product obtained by partial hydrolyzation and condensation of the polymer composition.

The surface treatment agent may contain a solvent. Examples of the solvent include fluorinated aliphatic hydrocarbon solvents such as perfluoroheptane and perfluorooctane; fluorinated aromatic hydrocarbon solvents such as m-xylenehexafluoride, bezotrifluoride and 1,3-bis(trifluoromethyl)benzene; fluorinated ether solvents such as methyl perfluorobutyl ether, ethyl perfluorobutyl ether, and perfluoro(2-butyltetrahydrofuran); fluorinated alkylamine solvents such as perfluorotributylamine and perfluorotripentylamine; hydrocarbon solvents such as petroleum benzene, mineral spirits, toluene, and xylene; ketone solvents such as acetone, methylethylketone, and methylisobutylketone. Among these, fluorinated solvents are preferred in view of solubility and wettability of the composition. Particularly preferred are 1,3-bis(trifluoromethyl)benzene, m-xylenehexafluoride, perfluoro(2-butyltetrahydrofuran), perfluorotributylamine and ethyl perfluorobutyl ether.

A mixture of two or more of the aforesaid solvents may be used. Preferably, the fluorooxyalkylene group-containing polymer and the condensate of the hydrolyzate obtained by partially hydrolyzing the polymer composition are dissolved homogeneously. An optimum concentration of the fluorooxyalkylene group-containing polymer composition in a solvent may be decided, depending on treatment conditions, and is generally from 0.01 to 30 wt%, preferably from 0.02 to 20 wt%, further preferably from 0.05 to 5 wt%.

The surface treatment agent may be applied on a substrate by any known methods, such as brushing, dipping, spraying and vapor deposition. Examples of a heating method for the vapor deposition include a resistance heating method and an electronic beam heating method, but are not limited thereto. The curing conditions may be selected, depending on surface treatment methods. When the composition is applied by brushing or dipping, the cured temperature is preferably from room temperature, i.e. 20 plus or minus 15 degrees C, to 200 degrees C. The curing is carried out preferably in a moisturized atmosphere to promote the curing reaction. The thickness of a cured coating may be selected depending on the type of the substrate, and is typically from 0.1 nm to 100 nm, particularly from 1 to 20 nm.

The substrate to be treated with the present surface treatment agent may be various substrates, such as paper, cloths, metals and metal oxides, glass, plastics, ceramics and quartz, but is not limited to these. The present surface treatment agent can provide water- and oil- repellency, low dynamic friction coefficient and abrasion resistance to these substrates. In particular, the present surface treatment agent can be used suitably for glasses treated with SiO₂ and for quartz substrates.

Examples of an article to be treated with the present surface treatment agent include optical articles which are equipped in, e.g., car navigation equipment, mobile phones, digital cameras, digital camcorders, PDAs', portable audio players, car audio devices, game machines, lenses of spectacles, lenses of cameras, filters for lenses, dark glasses, medical devices such as gastric cameras, copy machines, personal computers, liquid crystal displays, organic EL displays, plasma displays, touch panel displays, protection films, and anti-reflection films. The present surface treatment agent can give fingerprint proofness and abrasion resistance to these articles and, therefore, in particular, is suitable as a treatment agent to form a water- and oil- repellent layer on the surface of touch panel displays and anti-reflection films.

The present surface treatment agent further can be used suitably as water-repellent and stainproof coatings for sanitary products such as bathtubs and washbasins; stainproof coatings for window glass, tempered glass and head lamp covers in automobiles, trains and airplanes; water repellent and stainproof coatings for building materials for exterior walls; grease buildup-preventing coatings for kitchen building materials; water repellent, stainproof, poster- and graffiti-preventing coatings for telephone booths; coatings for water repellency and fingerprint prevention on artworks; coatings for preventing fingerprint on compact discs and DVDs' ; release agents for nanoimprint molds; and paint additives, resin modifying agents, flow- or dispersion- modifying agents for inorganic fillers, or lubrication enhancing agents for tapes and films.

### EXAMPLES

The present invention will be explained in detail by reference to the Examples and the Comparative Examples, but shall not be limited thereto.

### Example 1

500 Grams of the polymer represented by the following formula

HOOC-CF₂-(OC₂F₄)ₚ(OCF₂)_{q}-OCF₂COOH

wherein p/q=0.9, p+q is approximately 45, was dissolved in a mixed solvent of 400 g of 1,3-bis(trifluoromethyl)benzene and 100 g of tetrahydrofuran. 80 Grams of a 40 % solution of sodium bis(2-methoxyethoxy)alminium hydride in toluene was added dropwise to the mixture and stirred at room temperature for 3 hours, to which an appropriate amount of hydrochloric acid was subsequently added, sufficiently stirred, and then washed with water. The lower phase was taken out and the solvent was distilled off to obtain 440 g of a liquid product. According to ¹⁹F-NMR analysis, the product obtained comprised 50 mole % of the polymer represented by the following formula (4a), 48 mole % of the polymer represented by the following formula (4b) and 2 mole % of the polymer represented by the following formula (4c).

HOOC(OC₂F₄)ₚ(OCF₂)_{q}-OCF₂CH₂OH (4a)

HOH₂C-CF₂-(OC₂F₄)ₚ(OCF₂)_{q}-OCF₂CH₂OH (4b)

HOOC-CF₂-(OC₂F₄)ₚ(OCF₂)_{q}-OCF₂COOH (4c)

wherein p/q=0.9, p+q is approximately 45.

(ii) In a reactor, 300 g of the aforesaid mixture comprising 50 mole % of the polymer represented by the formula (4a), 48 mole % of the polymer represented by the formula (4b) and 2 mole % of the polymer represented by the formula (4c) was dissolved in 2.5 kg of a fluorinated solvent, PF 5060, ex 3M Co. Subsequently, 600 g of an anion exchange resin, B20-HG, ex Organo Corporation, was added to the mixture and stirred at 20 degrees C for 3 hours, to have the polymers represented by the formula (4a) or (4c) adsorbed on the anion exchange resin. The anion exchange resin was washed with PF 5060 to remove the polymer represented by the formula (4b). Subsequently, 3 kg of PF 5060 was mixed with the adsorbent, to which an appropriate amount of hydrochloric acid was then added and stirred at 20 degrees C for 3 hours. Subsequently, the mixture was left standing for 30 minutes to allow separating into a lower phase of a fluorinated solvent and an upper phase of a mixture of hydrochloric acid and the adsorbent. The fluorinated solvent phase was taken out and distilled to remove PF 5060 to obtain 90 g of a liquid product. According to ¹⁹F-NMR analysis, the product comprised 92 mole % of the polymer represented by the formula (4a), 5 mole % of the polymer represented by the formula (4b) and 3 mole % of the polymer represented by the formula (4c). Thus, the content of the polymer represented by the formula (4b) was 5.2 mole %, relative to the total moles of the polymers represented by the formula (4a) and (4b).

(iii) In a reactor, 40 g of the mixture obtained in the aforesaid step (ii) and comprising 92 mole % of the polymer represented by the formula (4a), 5 mole % of the polymer represented by the formula (4b) and 3 mole % of the polymer represented by the formula (4c), 3.5 g of ally bromide and 0.4 g of tetrabutylammonium hydrogen sulfate were placed and stirred at 50 degrees C for 3 hours. 5.2 Grams of an aqueous 30 % sodium hydroxide solution was added dropwise and aged at 55 degrees C for 12 hours. Then, appropriate amounts of PF 5060 and hydrochloric acid were added and stirred, and washed well with water. The lower phase was taken out and vacuum distilled to remove the solvent to obtain 32 g of a liquid product. According to ¹⁹F-NMR and ¹H-NMR analysis, the product obtained comprised 92 mole % of a polymer represented by the following formula (5a), 5 mole % of a polymer represented by the following formula (5b) and 3 mole % of a polymer represented by the following formula (5c).

HF₂C(OC₂F₄)ₚ(OCF₂)_{q}-OCF₂CH₂OCH₂CH=CH₂ (5a)

H₂C=CHCH₂OCH₂-CF₂-(OC₂F₄)ₚ(OCF₂)_{q}-OCF₂CH₂OCH₂CH=CH₂ (5b)

HF₂C(OC₂F₄)ₚ(OCF₂)_{q}-OCF₂H (5c)

wherein p/q=0.9, p+q is approximately 45.

(iv) Subsequently, 30 g of the mixture obtained in the aforesaid step (iii), 20 g of 1,3-bis(trifluoromethyl)benzene, 3 g of trimethoxysilane and 0.10 g of a solution of a chloroplatinic acid/vinyl siloxane complex in toluene, containing 2.5 X 10⁻⁸ mole of Pt, were mixed and aged at 70 degrees C for 3 hours. Then, the solvent and unreacted compounds were distilled off under reduced pressure to obtain 29 g of a liquid product.

The ¹H-NMR peaks of the product obtained are as follows.

| | |
|---|---|
| ―CH₂CH₂Si≡ | 0.50-0.72ppm, 1.61-1.72ppm |
| ≡SiOCH₃ | 3.41-3.66ppm |
| ―CH₂OCH₂― | 3.41-3.83ppm |
| ―CF₂H | 6.00-7.00ppm |

According to ¹H-NMR analysis, the product obtained comprised 92 mole % of a polymer represented by the following formula (6a), 5 mole % of a polymer represented by the following formula (6b) and 3 mole % of a polymer represented by the following formula (6c). Thus, the content of the polymer represented by the formula (6b) was 5.2 mole %, relative to the total moles of the polymers represented by the formula (6a) and (6b) . The product is hereinafter referred to as Composition 1.

HF₂C(OC₂F₄)ₚ(OCF₂)_{q}-OCF₂CH₂OC₃H₆Si(OCH₃)₃ (6a)

(CH₃O)₃SiC₃H₆OCH₂-CF₂-(OC₂F₄)ₚ(OCF₂)_{q}-OCF₂CH₂OC₃H₆Si(OCH₃)₃ (6b)

HF₂C(OC₂F₄)ₚ(OCF2)_{q}-OCF₂H (6c)

wherein p/q=0.9, p+q is approximately 45.

### Example 2

30 Grams of the mixture obtained in the aforesaid step (iii) were dissolved in 20 g of 1,3-bis(trifluoromethyl) benzene, to which 0.10 g of a solution of a chloroplatinic acid/vinyl siloxane complex in toluene, containing 2.5 X 10⁻⁸ mole of Pt, and 2.5g of a 1:1 adduct (HM-VMS) of tetramethyldisiloxane (HM) with vinyltrimethoxysilane (VMS) were added dropwise, and then aged at 90 degrees C for 2 hours. Then, the solvent and unreacted compounds were distilled off under reduced pressure to obtain 30 g of a liquid product.

The aforesaid HM-VMS was prepared in the following process.
In a reactor, 40 g of tetramethyldisiloxane (HM) and 40 g of toluene were placed and heated to 80 degrees C, to which a mixture of 44.2 g of vinyltrimethoxysilane (VMS) and 2 g of a solution of a chloroplatinic acid/vinyl siloxane complex in toluene, containing 1.1 X 10⁻⁷ mole of Pt, was added dropwise slowly. Then, the resulting mixture was purified by distillation to obtain 84g of a 1:1 adduct (HM-VMS) represented by the following formula.

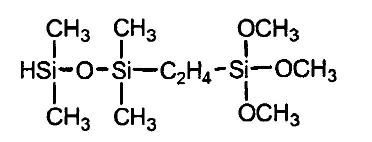

The ¹H-NMR peaks of the product obtained in Example 2 are as follows.

| | |
|---|---|
| ―SiCH₃ | 0.18-0.22ppm |
| ≡SiCH₂CH₂Si≡ | 0.34-0.61ppm |
| 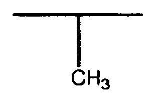 | 0.54-1.07ppm |
| ―CH₂CH₂Si≡ | 1.45-1.70ppm |
| ≡SiOCH₃ | 3.32-3.58ppm |
| ―CH₂OCH₂― | 3.32-3.74ppm |
| ―CF₂H | 6.00-7.00ppm |

According to ¹H-NMR analysis, the product obtained comprised 92 mole % of a polymer represented by the following formula (7a), 5 mole % of a polymer represented by the following formula (7b) and 3 mole % of a polymer represented by the following formula (7c). Thus, the content of the polymer represented by the formula (7b) was 5.2 mole %, relative to the total moles of the polymers represented by the formula (7a) and (7b) . The product is hereinafter referred to as Composition 2.

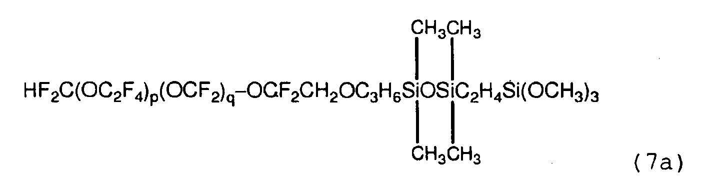

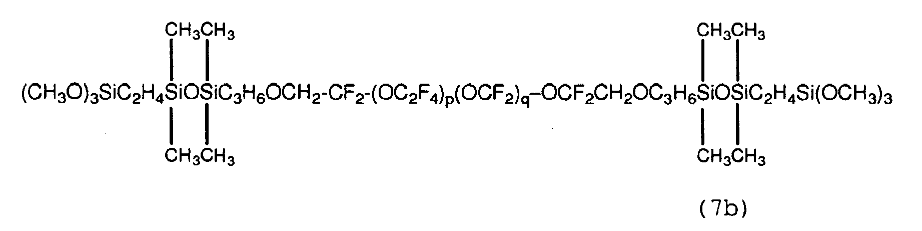

HF₂C(OC₂F₄)ₚ(OCF₂)_{q}-OCF₂H (7c)

wherein p/q=0.9, p+q is approximately 45.

### Examples 3 and 4 and Comparative Examples 1 and 2

The both-terminal hydrolyzable polymer represented by the aforesaid formula (6b) was added to the Composition 1 obtained in Example 1 to prepare compositions having the ratios in mole % as shown in the following Table 1.

**[Table 1]**

| | Ratio, mole % | | | 6b/(6a+6b), mole % |
|---|---|---|---|---|
| | 6a | 6b | 6c | |
| Example 3 | 90 | 7 | 3 | 7.2 |
| Example 4 | 88 | 9 | 3 | 9.3 |
| Com. Ex. 1 | 85 | 12 | 3 | 12.4 |
| Com. Ex. 2 | 82 | 15 | 3 | 15.5 |

### Example 5

30 g of the mixture obtained in the aforesaid step (iii), 20 g of 1,3-bis(trifluoromethyl)benzene, 8.12 g of a cyclic siloxane compound represented by the following formula 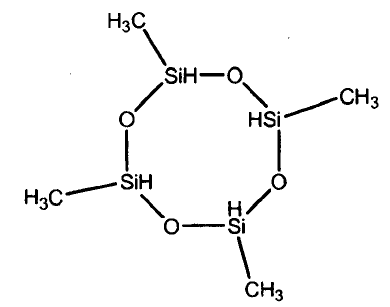 and 0.10 g of a solution of a chloroplatinic acid/vinyl siloxane complex in toluene, containing 2.5 X 10⁻⁸ mole of Pt, were mixed and aged at 80 degrees C for 3 hours. Subsequently, the solvent and unreacted compounds were distilled off under reduced pressure, to which 20 g of 1,3-bis(trifluoromethyl)benzene, 3.28 g of allyltrimethoxysilane and 0.10 g of a solution of a chloroplatinic acid/vinyl siloxane complex in toluene, containing 2.5 X 10⁻⁸ mole of Pt, were added and, then, mixed and aged at 90 degrees C for 3 hours. Then, the solvent and unreacted compounds were distilled off under reduced pressure to obtain a liquid product.

The ¹H-NMR peaks of the product obtained in Example 5 are as follows.

| | |
|---|---|
| 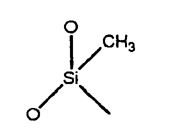 | 0.10-0.31ppm |
| ―CH₂CH₂Si≡ | 0.50-0.72ppm, 1.61-1.72ppm |
| ≡SiOCH₃ | 3.41-3.66ppm |
| ―CH₂OCH₂― | 3.41-3.83ppm |
| ―CF₂H | 6.00-7.00ppm |

According to ¹H-NMR analysis, the product obtained comprised 92 mole % of a polymer represented by the following formula (8a), 5 mole % of a polymer represented by the following formula (8b) and 3 mole % of polymer represented by the following formula (8c). Thus, the content of polymer represented by the formula (8b) was 5.2 mole %, relative to the total moles of polymers represented by the formula (8a) and (8b). The product is hereinafter referred to as Composition 3.

HF₂C(OC₂F4)ₚ(OCF₂)_{q}-OCF₂-X (8a)

X-F₂C(OC₂F₄)ₚ(OCF₂)_{q}-OCF₂-_{X} (8b)

HF₂C(OC₂F₄)ₚ(OCF₂)_{q}-OCF₂H (8c)

wherein p/q=0.9, p+q is approximately 45.

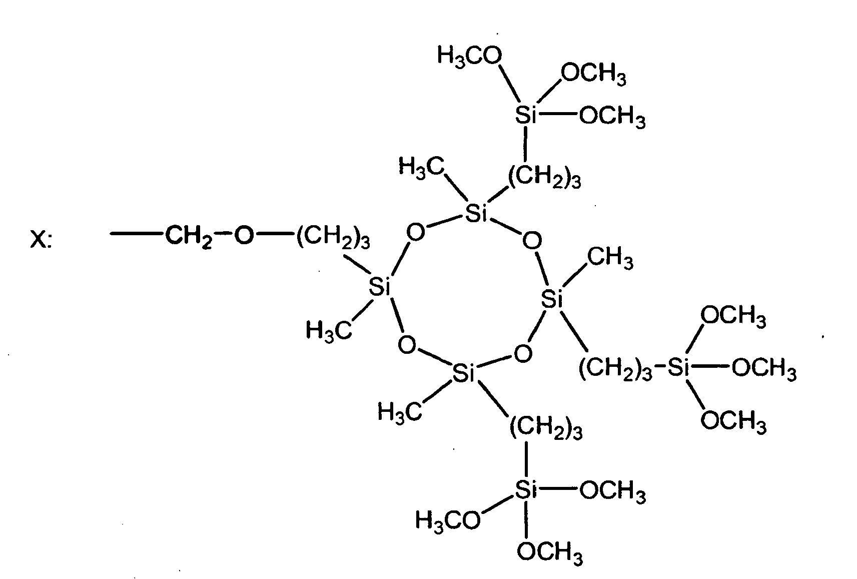

30 g of the mixture obtained in the aforesaid step (iii), 20 g of 1, 3-bis (trifluoromethyl) benzene, 8.12 g of a cyclic siloxane compound represented by the following formula 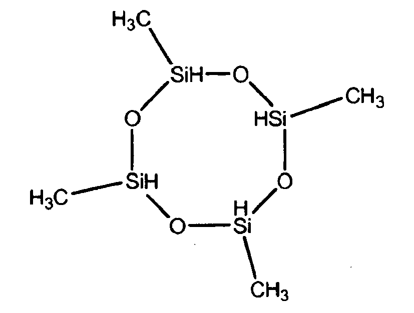 and 0.10 g of a solution of a chloroplatinic acid/vinyl siloxane complex in toluene, containing 2.5 X 10⁻⁸ mole of Pt, were mixed and aged at 80 degrees C for 3 hours. Subsequently, the solvent and unreacted compounds were distilled off under reduced pressure, to which 20 g of 1,3-bis(trifluoromethyl)benzene, 5.27 g of 9-decene-l-trimethoxysilane and 0.10 g of a solution of a chloroplatinic acid/vinyl siloxane complex in toluene, containing 2.5 X 10⁻⁸ mole of Pt, were added and, then, mixed and aged at 90 degrees C for 3 hours. Then, the solvent and unreacted compounds were distilled off under reduced pressure to obtain a liquid product.

The ¹H-NMR peaks of the product obtained in Example 6 are as follows.

| | |
|---|---|
| 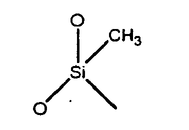 | 0.10-0.31ppm |
| ―CH₂CH₂Si≡ | 0.50-0.72ppm, 1.61-1.72ppm |
| ≡SiOCH₃ | 3.41-3.66ppm |
| ―CH₂OCH₂― | 3.41-3.83ppm |
| ―CF₂H | 6.00-7.00ppm |

According to ¹H-NMR analysis, the product obtained comprised 92 mole % of a polymer represented by the following formula (9a), 5 mole % of a polymer represented by the following formula (9b) and 3 mole % of polymer represented by the following formula (9c). Thus, the content of polymer represented by the formula (9b) was 5.2 mole %, relative to the total moles of polymers represented by the formula (9a) and (9b). The product is hereinafter referred to as Composition 4.

HF₂C(OC₂F₄)ₚ(OCF₂)_{q}-OCF₂-X (9a)

X-F₂C(OC₂F₄)ₚ(OCF₂)_{q}-OCF₂-X (9b)

HF₂C(OC₂F₄)ₚ(OCF₂)_{q}-OCF₂H (9c)

wherein p/q=0.9, p+q is approximately 45.

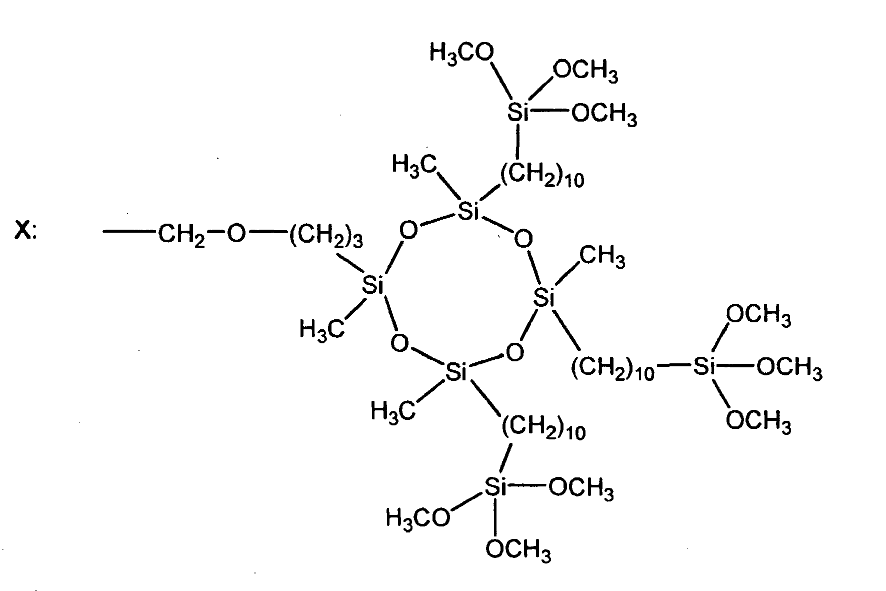

### Comparative Examples 3 to 9

Compounds and compositions used in Comparative Examples 3 to 9 were as follows.

### Comparative Example 3

F₃C(OC₂F₄)ₚ(OCF₂)_{q}-OCF₂CH₂OC₃H₆Si(OCH₃)₃

wherein p/q=0.9, p+q is approximately 45.

### Comparative Example 4

Mixture comprised 95 mole % of a polymer represented by the following formula (10a) and 5 mole % of a polymer represented by the following formula (10b),

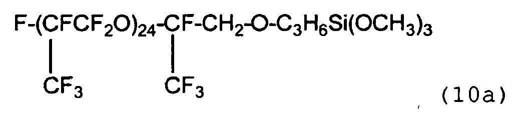

(CH₃O)₃SiC₃H₆OCH₂-CF₂(OC₂F₄)ₚ(OCF₂)_{q}-OCF₂-CH₂OC₃H₆Si(OCH₃)₃ (10b)

wherein p/q=0.9, p+q is approximately 45.

Comparative Example 5

(CH₃O)₃SiC₃H₆OCH₂-CF₂(OC₂F₄)ₚ(OCF₂)_{q}-OCF₂-CH₂OC₃H₆Si(OCH₃)₃

wherein p/q=0.9, p+q is approximately 45.

### Comparative Example 6

Composition comprised 50 mole % of a polymer represented by the following formula (11a), 25 mole % of a polymer represented by the following formula (11b) and 25 mole % of a polymer represented by the following formula (11c), 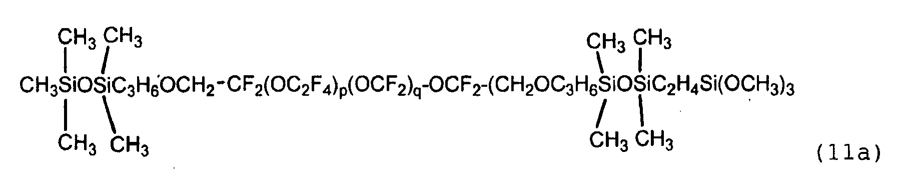 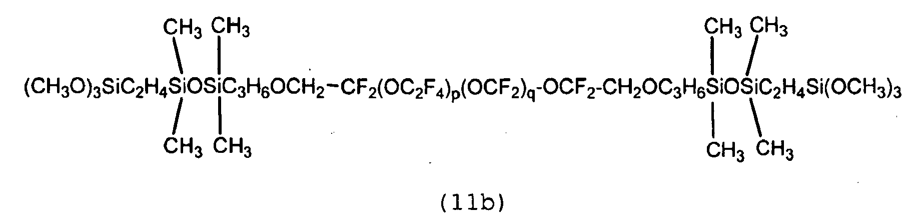 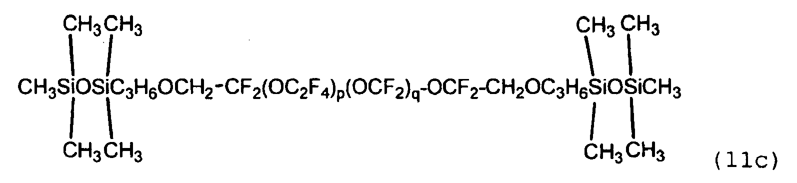 wherein p/q=0.9, p+q is approximately 45.

### Comparative Example 7

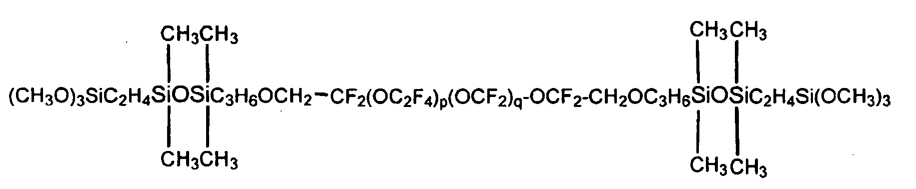

wherein p/q=0.9, p+q is approximately 45.

### Comparative Example 8

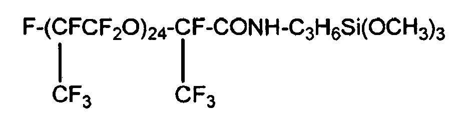

### Comparative Example 9

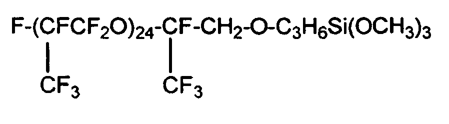

### Preparation of surface treatment agents and cured coatings

The fluorooxyalkylene group-containing polymer compositions or compounds of Examples 1 to 6 and Comparative Examples 1 to 9 were dissolved in 1,3-bis(trifluoromethyl)benzene in a 20 wt% concentration to obtain surface treatment agents. 10 Milligrams of each treatment agent was vacuum deposited on each glass whose outermost surface had been treated with 10 nm of SiO₂, Gorilla, ex Corning Incorporated, at a pressure of 9.0 x 10⁻⁴ Pa and a temperature of 740 degrees C, and was left at 40 degrees C and 80 % humidity for 2 hours to form a cured coating.

The cured coatings obtained were evaluated in the following method. The results are shown in Table 2.

### Evaluation of water― and oil ― repellency

Using a contact angle meter, Drop Master, ex Kyowa Interface Science Co., Ltd., the water contact angle and the oleic acid contact angle of the cured coatings were measured.

### Dynamic friction coefficient

The dynamic friction coefficient against Bemcot, ex Asahi Kasei, was measured in the following conditions with a surface property test machine, 14FW, ex Shinto Scientific Co., Ltd.
Contact area: 35mm x 35mm
Load: 200g

### Scrub Resistance

The surface of the cured coating was scrubbed with a rubbing tester, ex Shinto Scientific Co., Ltd., under the following conditions and, then, the water contact angle was determined at a temperature of 25 degrees C and a relative humidity of 40%.

### 1. Scrub Resistance against cloth

Cloth: Bemcot, ex Asahi Kasei Corporation
Scrub distance (one way): 30 mm
Scrub speed: 1800 mm/min
Load: 2 kg/cm²
Number of scrubbing: 50,000 times

### 2. Scrub Resistance against an eraser

Eraser: EB-SNP, ex TOMBOW Co., Ltd.
Scrub distance (one way): 30 mm
Scrub speed: 1800 mm/min
Load: 1 kg/cm²
Number of scrubbing: 10,000 times

### 3. Scrub Resistance against a steel wool

Steel wool: BONSTAR #0000, ex Nippon Steel Wool Co., Ltd.
Scrub distance (one way): 30 mm
Scrub speed: 1800 mm/min
Load: 1 kg/cm²
Number of scrubbing: 10,000 times

[0089]

**Table 2**

| | Initial values | | | After scrubbed | | |
|---|---|---|---|---|---|---|
| | | | | Cloth | Eraser | Steel wool |
| | Water repellency (°) | Oil repellency (°) | Dynamic friction coefficient | Water repellency (°) | Water repellency (°) | Water repellency (°) |
| Example 1 | 113 | 71 | 0.03 | 112 | 112 | 111 |
| Example 2 | 112 | 71 | 0.02 | 111 | 111 | 110 |
| Example 3 | 113 | 71 | 0.02 | 112 | 111 | 110 |
| Example 4 | 112 | 71 | 0.03 | 111 | 112 | 110 |
| Example 5 | 112 | 71 | 0.02 | 111 | 112 | 110 |
| Example 6 | 111 | 70 | 0.03 | 110 | 111 | 110 |
| Comparative Example 1 | 112 | 71 | 0.04 | 111 | 112 | 105 |
| Comparative Example 2 | 112 | 71 | 0.04 | 112 | 109 | 98 |
| Comparative Example 3 | 115 | 73 | 0.04 | 107 | 108 | 100 |
| Comparative Example 4 | 113 | 73 | 0.21 | 67 | 69 | 53 |
| Comparative Example 5 | 110 | 70 | 0.10 | 106 | 106 | 64 |
| Comparative Example 6 | 107 | 66 | 0.07 | 107 | 98 | 76 |
| Comparative Example 7 | 110 | 68 | 0.10 | 108 | 73 | 79 |
| Comparative Example 8 | 115 | 74 | 0.24 | 84 | 75 | 46 |
| Comparative Example 9 | 115 | 75 | 0.23 | 56 | 64 | 49 |

The cured coatings prepared in Comparative Examples 1 and 2, formed from the polymer compositions containing more than 10 mole % of the both-terminal hydrolyzable polymer had poor scrub resistance against steel wool. The cured coating prepared in Comparative Example 3, formed from the surface treatment agent which did not contain the both-terminal hydrolyzable polymer had poor abrasion resistance. The cured coating prepared in Comparative Example 4, formed from the surface treatment agent where the main chain of the one-terminal hydrolyzable polymer did not comprise -(OC₂F₄)ₑ(OCF₂)_{f}- structure had a high dynamic friction coefficient and poor abrasion resistance. The cured coatings prepared in Comparative Examples 5 and 7, formed from the surface treatment agents which did not comprise one-terminal hydrolyzable polymer had a high dynamic friction coefficient, poor water- and oil- repellency and poor abrasion resistance. The cured coating prepared in Comparative Example 6, formed from the polymer composition where the polymers did not have a fluorine atom at the terminals had poor water- and oil-repellency and poor abrasion resistance. The cured coatings prepared in Comparative Examples 8 and 9, formed from the surface treatment agents where the fluorooxyalkylene group-containing polymer had branched structures had a high dynamic friction coefficient and poor abrasion resistance. In contrast, the surface treatment agents prepared in Examples 1 to 6 provided cured coatings which had good water- and oil-repellency, a lower dynamic friction coefficient and good abrasion resistance, in particular, excellent scrub resistance enough to maintain the properties of the coatings after being scrubbed by the steel wool many times.

### INDUSTRIAL APPLICABILITY

The present fluorooxyalkylene group-containing polymer composition provides a coating which has excellent water- and oil- repellency, a low dynamic friction, good abrasion resistance, in particular, excellent scrub resistance. Further, the present fluorooxyalkylene group-containing polymer provides a coating which has better scrub resistance, compared to the surface treatment agent described in Japanese Patent Application Laid-Open No.2011-11694. Therefore, the surface treatment agent comprising the present fluorooxyalkylene group-containing polymer composition is useful to form a water- and oil- repellent layer on the surface of optical articles, such as touch panel displays and anti-reflection films.

## Claims

1. A fluorooxyalkylene group-containing polymer composition comprising:
a linear fluorooxyalkylene group-containing polymer represented by the following formula (1): 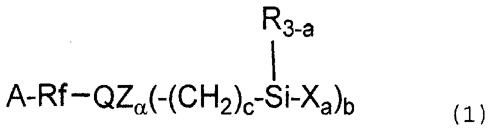 whrein Rf is represented by - (CF₂)_{d}-(OC₂F₄)ₑ(OCF₂)_{f}-O(CF₂)_{d}-, A is a monovalent fluorinated group whose terminal is -CF₂H, Q is a divalent organic group, Z is a divalent to octavalent organopolysiloxane moiety having a siloxane bond, R is an alkyl group having 1 to 4 carbon atoms or a phenyl group, X is a hydrolysable group, a is 2 or 3, b is an integer of from 1 to 7, c is an integer of from 1 to 20, α is 0 or 1, d is, independently of each other, 0 or an integer of from 1 to 5, e is an integer of from 0 to 80, f is an integer of from 0 to 80, and the total of e and f is from 5 to 100, and these repeating units may be sequenced at random, said polymer being hereinafter called "one-terminal hydrolyzable polymer", and
a linear fluorooxyalkylene group-containing polymer represented by the following formula (2): 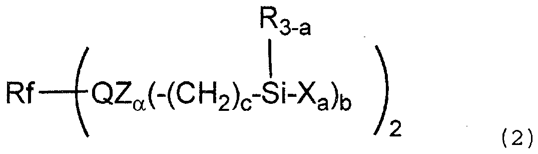 whrein Rf, Q, Z, R, X, a, b, c and α are as defined above, said polymer being hereinafter called "both-terminal hydrolyzable polymer",
wherein the amount of the both-terminal hydrolyzable polymer is 0.1 mole % or more but less than 10 mole %, relative to the total mole of the one-terminal hydrolyzable polymer and the both-terminal hydrolyzable polymer.

2. The fluorooxyalkylene group-containing polymer composition according to claim 1, wherein the composition further comprises a fluorooxyalkylene group-containing polymer represented by the following formula (3):
A-Rf-A (3)
wherein Rf and A are as defined above, hereinafter called "non-hydrolyzable polymer",
wherein the amount of the one-terminal hydrolyzable polymer is 80 mole % or more and the amount of the both-terminal hydrolyzable polymer is 0.1 mole % or more but less than 10 mole %, relative to the total mole of the one-terminal hydrolyzable polymer, the both-terminal hydrolyzable polymer and the non-hydrolyzable polymer.

3. The fluorooxyalkylene group-containing polymer composition according to claim 2, wherein the amount of the non-hydrolyzable polymer is 1 to 15 mole %, relative to the total mole of the one-terminal hydrolyzable polymer, the both-terminal hydrolyzable polymer and the non-hydrolyzable polymer.

4. The fluorooxyalkylene group-containing polymer composition according to any one of claims 1 to 3, wherein Z is a linear or cyclic organopolysiloxane moiety having 2 to 5 silicon atoms.

5. The fluorooxyalkylene group-containing polymer composition according to any one of claims 1 to 4, wherein Q is a substituted or unsubstituted hydrocarbon group having 2 to 12 carbon atoms and may have one or more bond selected from the group consisting of an amide bond, an ether bond(s) an ester bond and a vinyl bond.

6. The fluorooxyalkylene group-containing polymer composition according to any one of claims 1 to 5, wherein X is a group selected from the group consisting of alkoxy groups having 1 to 10 carbon atoms, oxyalkoxy groups having 2 to 10 carbon atoms, acyloxy groups having 1 to 10 carbon atoms, alkenyloxy groups having 2 to 10 carbon atoms and halogen atoms.

7. A surface treatment agent comprising the fluorooxyalkylene group-containing polymer composition according to any one of claims 1 to 6 and/or a product obtained by partial hydrolyzation and condensation of the fluorooxyalkylene group-containing polymer composition.

8. A method for preparing the fluorooxyalkylene group-containing polymer composition according to any one of claims 1 to 6, wherein the method comprises the step of subjecting a mixture of a fluorooxyalkylene group-containing polymer having a carboxyl group at one terminal and hydroxyl group at the other terminal, hereinafter called "one-terminal carboxyl group containing polymer", and a fluorooxyalkylene group-containing polymer having hydroxyl groups at both terminals, hereinafter called "both-terminal hydroxyl group containing polymer", to adsorption treatment and/or molecular distillation to provide a polymer composition having 0.1 mole % or more but less than 10 mole % of the both-terminal hydroxyl group containing polymer, relative to the total mole of the one-terminal carboxyl group containing polymer and the both-terminal hydroxyl group containing polymer.

9. An article treated with the surface treatment agent according to claim 7.

10. An optical article treated with the surface treatment agent according to claim 7.

11. A touch panel display treated with the surface treatment agent according to claim 7.

12. An anti-reflection film treated with the surface treatment agent according to claim 7.

13. A glass treated with SiO₂ and further treated with the surface treatment agent according to claim 7.

14. A tempered glass treated with the surface treatment agent according to claim 7.

15. A quartz substrate treated with the surface treatment agent according to claim 7.

## Patentansprüche

1. Fluoroxyalkylengruppe enthaltende Polymerzusammensetzung, umfassend:
ein lineares Fluoroxyalkylengruppe enthaltendes Polymer, dargestellt durch die folgende Formel (1): 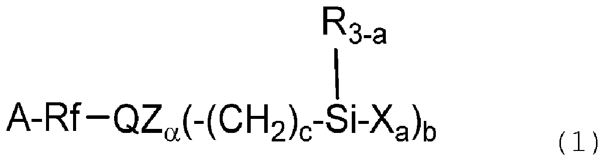 wobei Rf durch -(CF₂)_{d}-(OC₂F₄)ₑ(OCF₂)_{f}-O(CF₂)_{d}- dargestellt wird, A eine einwertige fluorierte Gruppe ist, deren Ende -CF₂H ist, Q eine zweiwertige organische Gruppe ist, Z ein zweiwertiger bis achtwertiger Organopolysiloxanrest mit einer Siloxanbindung ist, R eine Alkylgruppe mit 1 bis 4 Kohlenstoffatomen oder eine Phenylgruppe ist, X eine hydrolysierbare Gruppe ist, a gleich 2 oder 3 ist, b eine ganze Zahl von 1 bis 7 ist, c eine ganze Zahl von 1 bis 20 ist, a gleich 0 oder 1 ist, d unabhängig voneinander 0 oder eine ganze Zahl von 1 bis 5 ist, e eine ganze Zahl von 0 bis 80 ist, f eine ganze Zahl von 0 bis 80 ist, und die Summe von e und f von 5 bis 100 beträgt, und diese sich wiederholenden Einheiten beliebig aneinander gereiht werden können, wobei das Polymer im Folgenden als "an einem Ende hydrolysierbares Polymer" bezeichnet wird, und
ein lineares Fluoroxyalkylengruppe enthaltendes Polymer durch die folgende Formel (2) dargestellt wird: 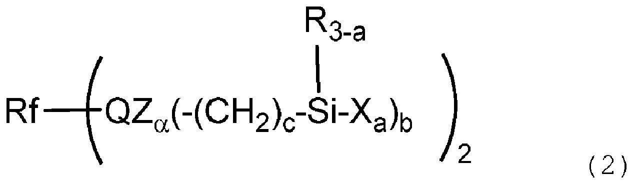 wobei Rf, Q, Z, R, X, a, b, c und a wie oben definiert sind, wobei das Polymer im Folgenden als "an beiden Enden hydrolysierbares Polymer" bezeichnet wird,
wobei die Menge des an beiden Enden hydrolysierbaren Polymers 0,1 Mol% oder mehr beträgt, jedoch weniger als 10 Mol% bezogen auf die Molsumme des an einem Ende hydrolysierbaren Polymers und des an beiden Enden hydrolysierbaren Polymers.

2. Fluoroxyalkylengruppe enthaltende Polymerzusammensetzung nach Anspruch 1, wobei die Zusammensetzung ferner ein Fluoroxyalkylengruppe enthaltendes Polymer umfasst, das durch die folgende Formel (3) dargestellt wird:
A-Rf-A (3)
wobei Rf und A wie oben definiert sind, im Folgenden als "nicht hydrolysierbares Polymer" bezeichnet,
wobei die Menge des an einem Ende hydrolysierbaren Polymers 80 Mol% oder mehr und die Menge des an beiden Enden hydrolysierbaren Polymers 0,1 Mol% oder mehr beträgt, jedoch weniger als 10 Mol% bezogen auf die Molsumme des an einem Ende hydrolysierbaren Polymers, des an beiden Enden hydrolysierbaren Polymers und des nicht hydrolysierbaren Polymers.

3. Fluoroxyalkylengruppe enthaltende Polymerzusammensetzung nach Anspruch 2, wobei die Menge des nicht-hydrolysierbaren Polymers 1 bis 15 Mol% beträgt, bezogen auf die Molsumme des an einem Ende hydrolysierbaren Polymers, des an beiden Enden hydrolysierbaren Polymers und des nicht hydrolysierbaren Polymers.

4. Fluoroxyalkylengruppe enthaltende Polymerzusammensetzung nach einem der Ansprüche 1 bis 3, wobei Z ein linearer oder zyklischer Organopolysiloxanrest mit 2 bis 5 Siliciumatomen ist.

5. Fluoroxyalkylengruppe enthaltende Polymerzusammensetzung nach einem der Ansprüche 1 bis 4, wobei Q eine substituierte oder unsubstituierte Kohlenwasserstoffgruppe mit 2 bis 12 Kohlenstoffatomen ist und eine oder mehrere Bindungen aufweisen kann, ausgewählt aus der Gruppe bestehend aus einer Amidbindung, einer Etherbindung (en), einer Esterbindung und einer Vinyl-Bindung.

6. Fluoroxyalkylengruppe enthaltende Polymerzusammensetzung nach einem der Ansprüche 1 bis 5, wobei X eine Gruppe ist, ausgewählt aus der Gruppe bestehend aus Alkoxygruppen mit 1 bis 10 Kohlenstoffatomen, Oxyalkoxygruppen mit 2 bis 10 Kohlenstoffatomen, Acyloxygruppen mit 1 bis 10 Kohlenstoffatomen, Alkenyloxygruppen mit 2 bis 10 Kohlenstoffatomen und Halogenatomen.

7. Mittel zur Oberflächenbehandlung, umfassend die Fluoroxyalkylengruppe enthaltende Polymerzusammensetzung nach einem der Ansprüche 1 bis 6 und / oder ein Erzeugnis, das durch partielle Hydrolyse und Kondensation der Fluoroxyalkylengruppe enthaltenden Polymerzusammensetzung erhalten wird.

8. Verfahren zur Herstellung der Fluoroxyalkylengruppe enthaltenden Polymerzusammensetzung nach einem der Ansprüche 1 bis 6, wobei das Verfahren den Schritt umfasst, ein Gemisch aus
einem Fluoroxyalkylengruppe enthaltenden Polymer mit einer Carboxylgruppe an einem Ende und einer Hydroxylgruppe an dem anderen Ende, im Folgenden als "an einem Ende Carboxylgruppe enthaltendes Polymer" bezeichnet, und
einem Fluoroxyalkylengruppe enthaltenden Polymers mit Hydroxylgruppen an beiden Enden, im Folgenden als "an beiden Enden Hydroxylgruppen enthaltendes Polymer" bezeichnet,
einer Adsorptionsbehandlung und / oder Molekulardestillation zu unterziehen, um eine Polymerzusammensetzung mit 0,1 Mol% oder mehr, jedoch weniger als 10 Mol% des an beiden Enden Hydroxylgruppen enthaltenden Polymers, bezogen auf die Molsumme des an einem Ende eine Carboxylgruppe enthaltenden Polymers und die an beiden Enden Hydroxylgruppen enthaltenden Polymers, vorzusehen.

9. Gegenstand, behandelt mit dem Oberflächenbehandlungsmittel nach Anspruch 7.

10. Optischer Gegenstand, behandelt mit dem Oberflächenbehandlungsmittel behandelt nach Anspruch 7.

11. Bildschirmtastfeld, behandelt mit dem Oberflächenbehandlungsmittel nach Anspruch 7.

12. Antireflexionsfilm, behandelt mit dem Oberflächenbehandlungsmittel nach Anspruch 7.

13. Glas, behandelt mit SiO₂ und ferner mit dem Oberflächenbehandlungsmittel nach Anspruch 7.

14. Hartglas, behandelt mit dem Oberflächenbehandlungsmittel nach Anspruch 7.

15. Quarzsubstrat, behandelt mit dem Oberflächenbehandlungsmittel nach Anspruch 7.

## Revendications

1. Composition polymère contenant un groupe fluorooxyalkylène comprenant :
un polymère contenant un groupe fluorooxyalkylène linéaire représenté par la formule (1) suivante : 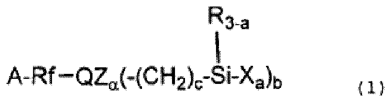 dans laquelle Rf est représenté par -(CF₂)_{d} -(OC₂F₄)ₑ(OCF₂)_{f}-O(CF₂)_{d}-, A est un groupe fluoré monovalent dont la terminaison est -CF₂H, Q est un groupe organique divalent, Z est une moitié organopolysiloxane divalente à octavalente présentant une liaison siloxane, R est un groupe alkyle ayant de 1 à 4 atomes de carbone ou un groupe phényle, X est un groupe hydrolysable, a est égal à 2 ou à 3, b est un nombre entier de 1 à 7, c est un nombre entier de 1 à 20, α est égal à 0 ou 1, d est, indépendamment l'un de l'autre, égal à 0 ou à un nombre entier de 1 à 5, e est un nombre entier de 0 à 80, f est un nombre entier de 0 à 80, et le total de e et f est de 5 à 100, et ces unités répétitives peuvent être séquencées statistiquement, ledit polymère étant ci-après appelé "polymère hydrolysable à une terminaison", et
un polymère contenant un groupe fluorooxyalkylène linéaire représenté par la formule (2) suivante : 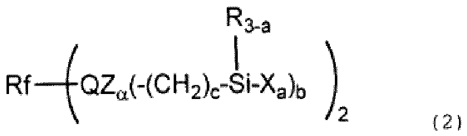 où Rf, Q, Z, R, X, a, b, c et α sont comme définis ci-dessus, ledit polymère étant ci-après appelé "polymère hydrolysable aux deux terminaisons",
dans lequel la quantité du polymère hydrolysable aux deux terminaisons est de 0,1 % en mole ou supérieure mais inférieure à 10 % en mole, par rapport aux moles totales du polymère hydrolysable à une terminaison et du polymère hydrolysable aux deux terminaisons.

2. Composition polymère contenant un groupe fluorooxyalkylène selon la revendication 1, dans laquelle la composition comprend de plus un polymère contenant un groupe fluorooxyalkylène représenté par la formule (3) suivante :
A-Rf-A (3)
où Rf et A sont comme définis ci-dessus, appelé ci-après "polymère non hydrolysable",
dans laquelle la quantité du polymère hydrolysable à une terminaison est de 80 % en mole ou supérieure et la quantité du polymère hydrolysable aux deux terminaisons est de 0,1 % en mole ou supérieure mais inférieure à 10 % en mole, par rapport aux moles totales du polymère hydrolysable à une terminaison, du polymère hydrolysable aux deux terminaisons et du polymère non hydrolysable.

3. Composition polymère contenant un groupe fluorooxyalkylène selon la revendication 2, dans laquelle la quantité du polymère non hydrolysable est de 1 à 15 % en mole, par rapport aux moles totales du polymère hydrolysable à une terminaison, du polymère hydrolysable aux deux terminaisons et du polymère non hydrolysable.

4. Composition polymère contenant un groupe fluorooxyalkylène selon l'une quelconque des revendications 1 à 3, dans laquelle Z est une moitié organopolysiloxane linéaire ou cyclique ayant de 2 à 5 atomes de silicium.

5. Composition polymère contenant un groupe fluorooxyalkylène selon l'une quelconque des revendications 1 à 4, dans laquelle Q est un groupe hydrocarboné substitué ou non substitué ayant de 2 à 12 atomes de carbone et peut présenter une ou plusieurs liaisons choisies dans le groupe constitué d'une liaison amide, d'une(de) liaison(s) éther, d'une liaison ester et d'une liaison vinyle.

6. Composition polymère contenant un groupe fluorooxyalkylène selon l'une quelconque des revendications 1 à 5, dans laquelle X est un groupe choisi dans le groupe constitué de groupes alcoxy ayant de 1 à 10 atomes de carbone, de groupes oxyalcoxy ayant de 2 à 10 atomes de carbone, de groupes acyloxy ayant de 1 à 10 atomes de carbone, de groupes alcényloxy ayant de 2 à 10 atomes de carbone et d'atomes d'halogène.

7. Agent de traitement de surface comprenant la composition polymère contenant un groupe fluorooxyalkylène selon l'une quelconque des revendications 1 à 6 et/ou un produit obtenu par hydrolysation partielle et condensation de la composition polymère contenant un groupe fluorooxyalkylène.

8. Procédé de préparation de la composition polymère contenant un groupe fluorooxyalkylène selon l'une quelconque des revendications 1 à 6, dans lequel le procédé comprend l'étape consistant à soumettre un mélange d'un polymère contenant un groupe fluorooxyalkylène présentant un groupe carboxyle à une terminaison et un groupe hydroxyle à l'autre terminaison, appelé ci-après "polymère contenant un groupe carboxyle à une terminaison", et un polymère contenant un groupe fluorooxyalkylène présentant des groupes hydroxyle aux deux terminaisons, appelé ci-après "polymère contenant un groupe hydroxyle aux deux terminaisons", à un traitement d'adsorption et/ou une distillation moléculaire pour fournir une composition polymère présentant 0,1 % en mole ou plus mais moins de 10 % en mole du polymère contenant un groupe hydroxyle aux deux terminaisons, par rapport aux moles totales du polymère contenant un groupe carboxyle à une terminaison et du polymère contenant un groupe hydroxyle aux deux terminaisons.

9. Article traité avec l'agent de traitement de surface selon la revendication 7.

10. Article optique traité avec l'agent de traitement de surface selon la revendication 7.

11. Affichage de panneau tactile traité avec l'agent de traitement de surface selon la revendication 7.

12. Film anti-reflet traité avec l'agent de traitement de surface selon la revendication 7.

13. Verre traité avec SiO₂ et de plus traité avec l'agent de traitement de surface selon la revendication 7.

14. Verre trempé traité avec l'agent de traitement de surface selon la revendication 7.

15. Substrat en quartz traité avec l'agent de traitement de surface selon la revendication 7.
